Europäisches Patentamt

European Patent Office

Office européen des brevets

(11) Publication number: **0 266 056**
**A1**

## (12) EUROPEAN PATENT APPLICATION

(21) Application number: 87308480.0

(22) Date of filing: 25.09.87

(51) Int. Cl.⁴: **B25J 9/10** , B25J 19/00 , B25J 11/00

(30) Priority: 23.10.86 GB 8625350

(43) Date of publication of application:
04.05.88 Bulletin 88/18

(84) Designated Contracting States:
AT BE CH DE ES FR GB GR IT LI LU NL SE

(71) Applicant: THORN EMI plc
THORN EMI House Upper Saint Martin's Lane
London, WC2H 9ED(GB)

(72) Inventor: Williams, Anthony Michael
4, Syke Ings Richings Park
Iver Buckinghamshire(GB)
Inventor: Walters, Peter Ernest
4, Spring Court Church Road
Hanwell London W7(GB)

(74) Representative: Fleming, Ian Alexander et al
THORN EMI Patents Limited The Quadrangle
Westmount Centre Uxbridge Road
Hayes Middlesex, UB4 0HB(GB)

(54) **A robotic manipulator arrangement.**

(57) A robotic manipulator arrangement comprises a first robotic manipulator (12) which is driven along a linear track (15) above a work table (16) and has at least one other degree of freedom. The arrangement also has a second manipulator (30) which can grip a workpiece and can rotate about two mutually orthogonal axes (X, Y) lying in a plane parallel to the worktable (16).

FIG. 2

# A ROBOTIC MANIPULATOR ARRANGEMENT

This invention relates to a robotic manipulator arrangement and it relates particularly, though not exclusively, to a robotic manipulator arrangement including a linear drive mechanism.

Known robotic manipulator arrangements, an anthropomorphic robot for example, may have complex kinematics and drive control systems and, for that reason, they can be expensive. The inventors have found, however, that many tasks required of such known manipulator arrangements can be accomplished using relatively short (typically 200 mm-300mm) rectilinear movements, and so, in many practical applications, it may not be possible to fully exploit their capabilities.

It is an object of this invention to provide a different kind of robotic manipulator arrangement which at least alleviates the afore-mentioned problem.

According to the invention there is provided a robotic manipulator arrangement including a first manipulator displaceable along a linear, horizontal track above a work surface, and having at least one other degree of freedom; and a second manipulator having at least two degrees of freedom.

An embodiment of the invention is now described, by way of example only, by reference to the accompanying drawings of which:-

Figure 1 illustrates, diagramatically a side view of a linear drive mechanism and is useful in understanding the operating principle of the mechanism,

Figure 2 shows a generalised perspective view of a robotic manipulator arrangement in accordance with the invention which may include the linear drive mechanism arrangement,

Figure 3 shows a transverse, cross-sectional view through a linear drive mechanism as embodied in the arrangement of Figure 2,

Figures 4 to 6 illustrate diagramatically different configurations of the robotic manipulator arrangement of Figure 2 and Figure 7 shows how a number of the robotic manipulator arrangements may be combined in a linear configuration.

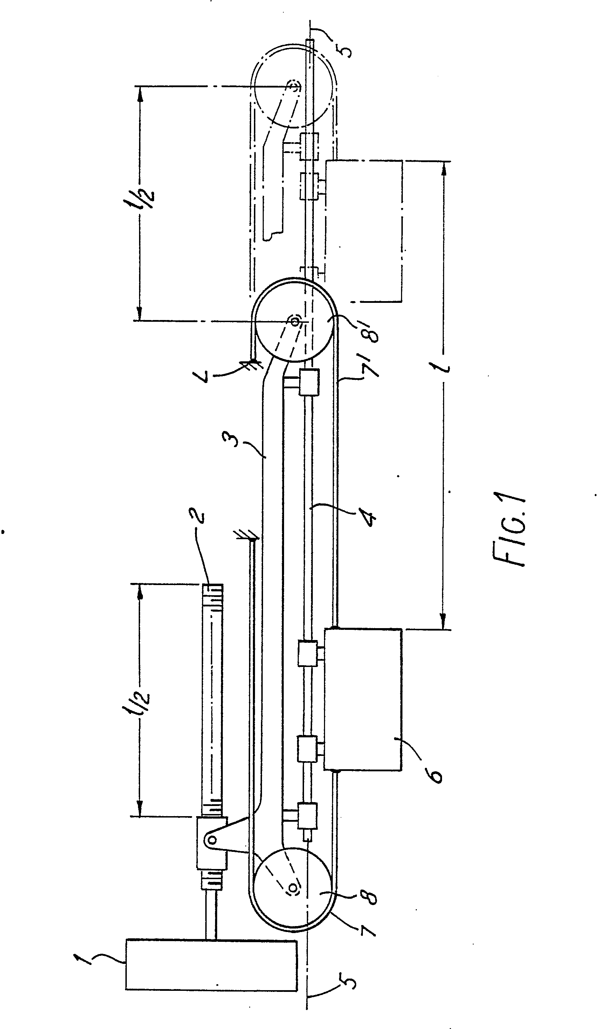

The drive mechanism illustrated diagramatically in Figure 1 of the drawings includes a rotary motor 1 which is arranged to drive a lead screw 2, assumed to be $\ell/2$ in length. The lead screw drives a frame member 3 which is supported by, and guided along, a slideway 4 defining a linear track 5. The slideway also supports and guides a driven load represented generally as a block 6 in the drawing.

As will be apparent, the load can move along the track relative to the frame member, but is coupled drivingly thereto by means of two steel bands 7,7' which pass around pulleys 8,8'. mounted at opposite ends of the frame member. The ends of one of the bands (7) are attached respectively to the load member and to the frame member and the ends of the other band (7') are attached respectively to the load member and to a location L which is fixed with respect to the load member and the frame member.

It will be appreciated that if the frame member is displaced through a distance $\ell/2$, e the maximum travel permitted by the lead screw, the load will be displaced through twice that distance, during the same interval of time, the final position of the frame member and the load member being represented in broken outline.

As compared with hitherto known mechanisms, wherein the load is driven directly. The inventors find that although the linear drive force required to be executed by the motor at the frame member is increased, the velocity and acceleration required of the motor are reduced. Particularly for high speed motions of the load member this mechanism gives greater flexibility in drive selection and allows better balance of drive and driven inertias to be achieved. The length and diameter of the lead screw may also be reduced. These factors can lead to a more efficient, cost-effective mechanism.

The inventors envisage that a linear drive mechanism of this kind has wide applicability, especially in an industrial environment where the driven loads can be relatively large.

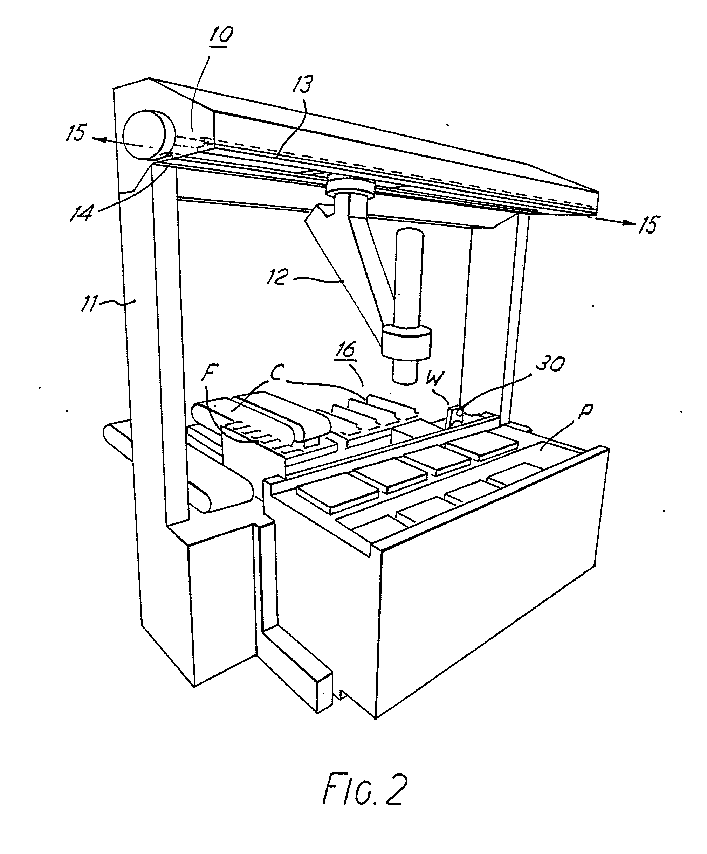

In one application, the drive mechanism is embodied in a robotic manipulator arrangement illustrated generally in Figure 2 of the drawings, this system being particularly, though not exclusively, suited to assembly tasks.

The drive mechanism, shown generally at 10, is mounted on a gantry 11, and is used to drive a robotic manipulator 12 along a pair of slideways 13, 14 which define a linear, horizontal track 15. As will be described in greater detail hereafter, the manipulator can move within a well-defined work cell above a generally rectangular work table 16 where a number of assembly and/or processing tasks are carried out.

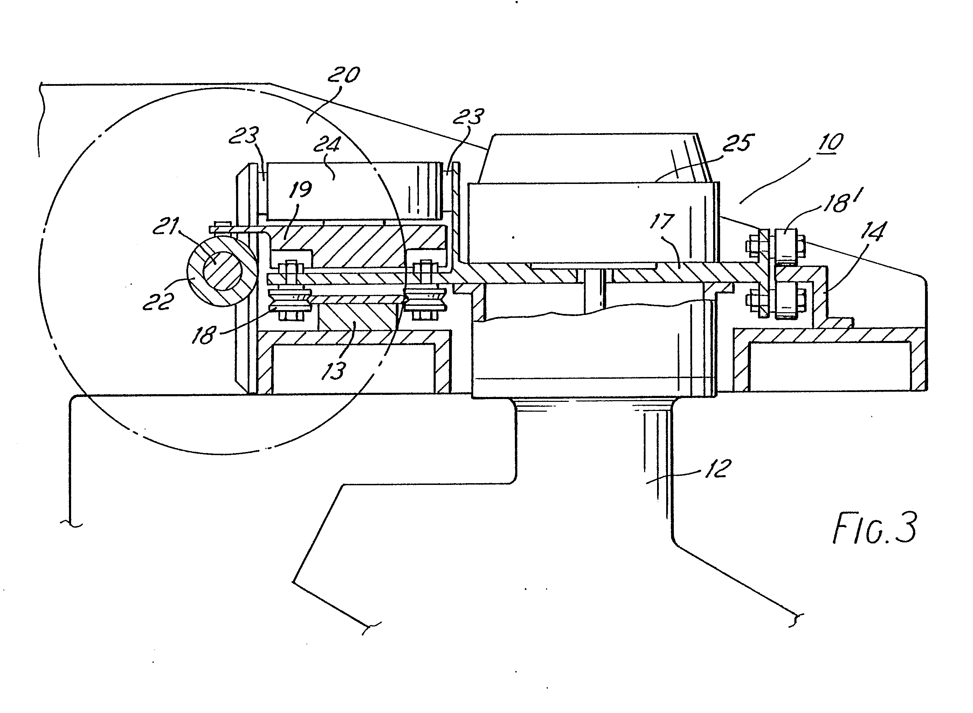

Figure 3, of the drawings shows a cross-sectional view through drive mechanism 10, taken transversely of slideways 13, 14 and illustrates how the mechanism could be configured in practice.

Referring to Figure 3, a load member (corresponding to component 16 in Figure 1) comprises a generally flat plate 17 which supports the manipulator 12, as shown. The plate itself is supported on, and guided along, each slideway by means of a respective pair 18, 18' of rollers, slideway 14 and the associated rollers 18' being used chiefly to stabilise the plate. A frame member 19 (corresponding to component 3 in Figure 1) is also supported on slideway 13 by another set of rollers (not shown), and a rotary motor, shown generally at 20, transmits drive to the frame member via a lead screw 21 which extends lengthwise of the slideways (i.e. parallel to track 15) and meshes with a lead nut 22 attached to the frame member. As before, the load member is capable of movement along track 15, relative to the frame member, but is coupled drivingly thereto by means of two steel bands (eg 23) which pass around two pulleys, of which only one, 24, is shown in the drawing, mounted on the frame member. These bands are attached exactly as described hereinbefore by reference to Figure 1.

The robotic manipulator arrangement, shown generally in Figure 2, includes a first manipulator 11 supported by, and displaceable along, slideways 13, 14 above the work table 16, and a second manipulator 30 mounted on the table at a work station W.

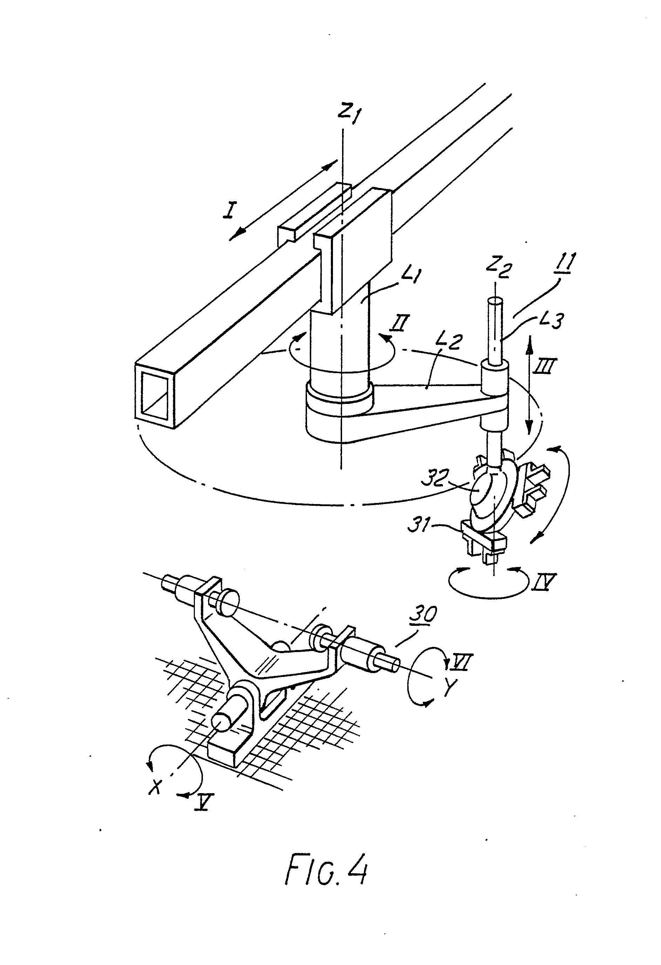

For clarity of illustration the manipulators 11 and 30 have been represented diagramatically in Figure 4. The first manipulator 11 includes a first limb L(1) which is mounted on the slideway and aligned on a first vertical axis $Z_1$, a second limb L-(2) rotatable about axis $Z_1$, and a third limb L(3) which mounts an end effector, typically a gripper device 31, which is displaceable along, and rotatable about, a second vertical axis $Z_2$. The second manipulator 30 is arranged to grip a work piece and is rotatable with respect to the table about two mutually orthogonal axes (X,Y) lying in a plane parallel to the work table.

It will be apparent that this manipulator arrangement has a total of six degrees of freedom which are distributed between the first and second manipulators, four degrees of freedom (designated as I, II, III and IV) being ascribed to the first manipulator and the remaining two (designated as V and VI) being ascribed to the second manipulator.

These degrees of freedom comprise:-

I - translation along a horizontal axis ($X_1$). Such translation could be effected by means of a linear drive mechanism as described herein by reference to Figure 3, though it will be understood that, in general, alternative forms of drive could be used.

II - rotation about the first vertical axis $Z1_1$. This can be effected by a rotary drive motor as shown at 25 in Figure 3.

III - translation of the end effector along the second vertical axis $Z_2$.

IV - rotation of the end effector about the second vertical axis.

V and VI - rotation about mutually orthogonal axes X and Y.

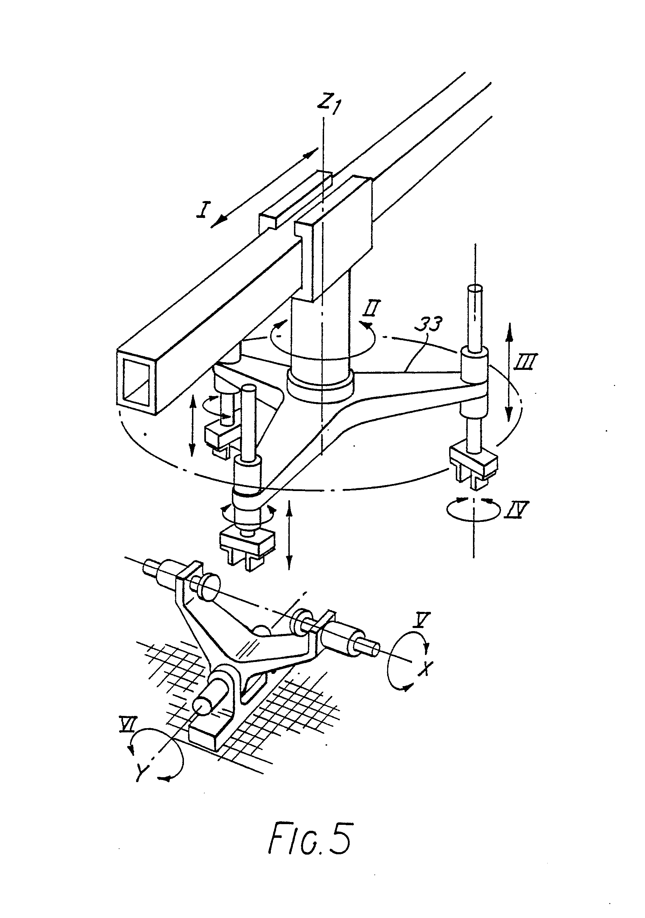

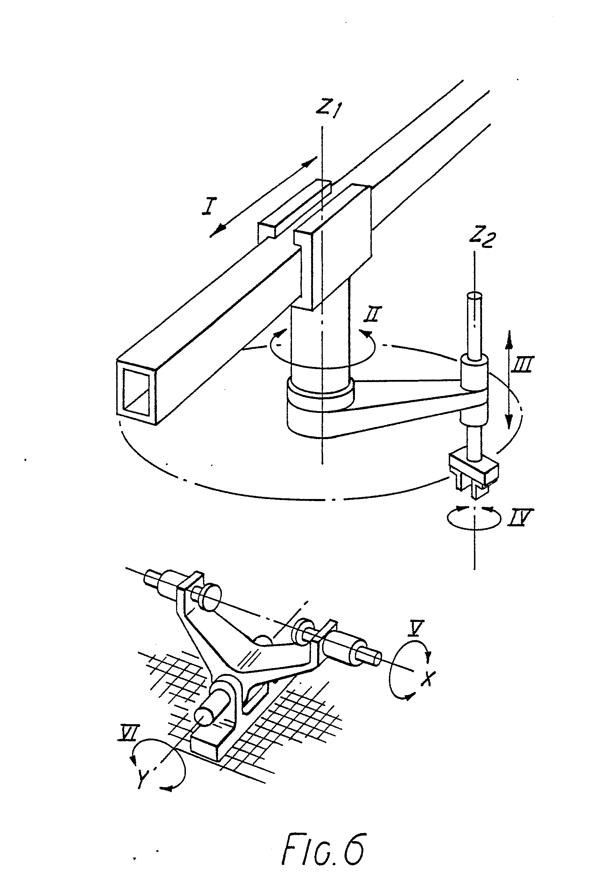

The inventors have found that a distributed system of this kind can achieve relative simplicity in regard to both kinematics and drive control. As compared with more complex systems, such as the known six axis, anthropomorphic robot, a distributed system may be more cost effective and yet still offers the flexibility needed to perform a wide range of assembly and/or processing tasks within the same job sequence. Moreover, the gripper device 31 may be interchanged with any of a number of different gripper devices, each dedicated to a specific task, held at a "finger change" station, referenced at F in Figure 2, and with the facility the system can acquire an even greater flexibility permitting a wider variety of tasks to be performed. A finger change mechanism suitable for this application is described in our copending European patent application, Publication No. 0168945. If desired this interchange facility may be augmented by providing a number (3 say) of gripper devices on a common rotary indexing head, referenced at 32 in Figure 4. Alternatively, as shown in Figure 5, each gripper device could be mounted individually on a respective one of a number of arms 33 distributed evenly about vertical axis $Z_1$. Alternatively, of course, one gripper device only could be used, as shown in Figure 6.

The manipulator arrangement illustrated, by way of example, in Figure 2 can be used to carry out a wide variety of assembly and/or processing tasks within the work cell. These include transfer of components from pallets introduced into the work cell at P or on vibrational and/or belt driven conveyors C; distribution of contact sensors at selected locations on the work table 16, manipulation and/or processing of a work piece held in manipulator 30; use of dedicated tools eg a pneumatic screw driver.

It will be appreciated that a robotic manipulator arrangement in accordance with this invention need not necessarily have six degrees of freedom, nor need the degrees of freedom be distributed in the manner described. Indeed, the first manipulator requires, as a minimum, a linear displacement along a horizontal ($X_1$) axis together with at least one other degree of freedom, while the second manipulator, positioned on the work table, requires at least two degrees of freedom. In general, the degrees of freedom are selected to suit the requirements of a specific application, having regard to the nature of the tasks to be performed, the available working space, and the preferred distribution of work stations within that space.

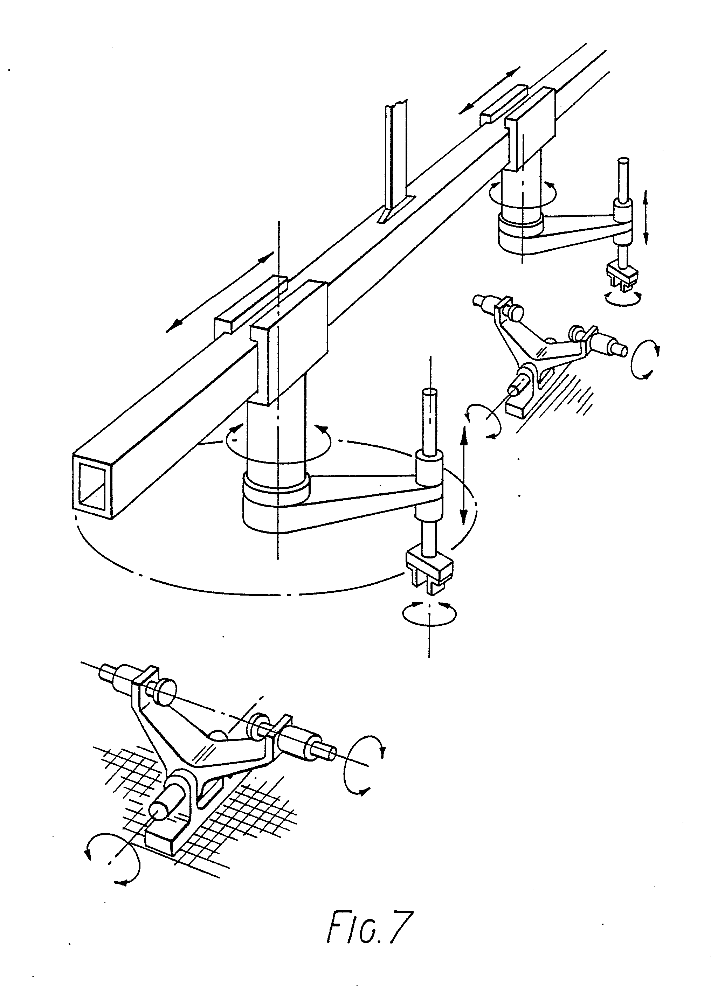

It will be appreciated that a robotic manipulator arrangement of the kind described by reference to Figure 2 could, in principle, be used to carry out an entire assembly procedure. An alternative arrangement, however, shown in Figure 7, includes a number of different work cells arranged in succession to define, in effect, an assembly line. Each cell has a respective manipulator arrangement with distributed axes, as described in hereinbefore, which is dedicated to a specific, but limited, task within the overall assembly procedure. Adjacent cells in the "line" are arranged to overlap with one another allowing a work piece to be transferred progressively along the line at different stages of completion.

In many assembly and/or processing operations the positional accuracy of the gripper device in relation to the work piece can be of critical importance, and so, hitherto, it has been customary to provide some form of compliant mechanism between the robot arm and the gripper device.

Our copending European Patent Application, Publication No.0191246, the content of which is incorporated herein, describes one such mechanism which allows the gripper device to move relative to a manipulator arm along and/or about each of two mutually orthogonal axes provided relative displacement along the arm axes exceeds a predetermined amount. The inventors have found that in certain applications, particularly those requiring insertion of an object (eg a pin) in a closely fitting hole, it can be advantageous to allow an additional relative displacement about the arm axis.

## Claims

1. A robotic manipulator arrangement including a first manipulator displaceable along a linear, horizontal track above a work surface, and having at least one other degree of freedom; and a second manipulator, having at least two degrees of freedom.

2. A robotic manipulator arrangement according to Claim 1 wherein said first manipulator is rotatable about an axis orthogonal to said linear, horizontal track.

3. A robotic manipulator arrangement according to Claim 1 where said first manipulator mounts an end effector displaceable along, and or about, a further axis, parallel to said orthogonal axes.

4. A robotic manipulator arrangement according to Claim 3 wherein said end effector includes a rotary indexing gripper head mounting a plurality of different gripper devices.

5. A robotic manipulator arrangement according to Claim 3 wherein said end effector includes a plurality of gripper devices distributed at regular intervals around said orthogonal axis.

6. A robotic manipulator arrangement according to any one of Claims 1 to 3 wherein said second manipulator is arranged to grip a work piece and can be displaced with respect to the work surface about two mutually orthogonal axes.

7. A robotic manipulator arrangement according to Claim 6 where said mutually orthogonal axes lie in a common place parallel to said work surface.

8. A robotic manipulator arrangement according to any one of claims 1 to 7 including a linear drive means arranged to drive said first manipulator along said linear horizontal track wherein the drive means comprises a frame member, means for directly driving the frame member along said linear track and means to drivingly couple the first manipulator to the frame member whereby, in use, the first manipulator is displaced along said track with respect to said frame member in response to, and in the same sense as, a displacement of said frame member along the track.

9. A robotic manipulator arrangement according to Claim 8 wherein said frame member and said first manipulator are mounted on a common guide for displacement along the track.

FIG.1

FIG. 2

FIG. 3

FIG. 4

FIG.5

FIG. 6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | EP - A1 - 0 139 857 (ASEA) | | B 25 J 9/10 |
| X | * Fig. 1-3; page 7, lines 25-29 * | 1-5 | B 25 J 19/00 |
| A | * Fig. 1 * | 8,9 | B 25 J 11/00 |
| | -- | | |
| | DE - A1 - 3 217 967 (DIGITAL ELECTRONIC AUTOMATION) | | |
| X | * Fig. 1; abstract * | 1,3,6, 7 | |
| A | * Fig. 1 * | 8,9 | |
| | -- | | |
| | GB - A - 2 110 647 (HITACHI) | | |
| A | * Fig. 6a-6c * | 1,8,9 | |
| | ---- | | |

TECHNICAL FIELDS
SEARCHED (Int. Cl.4)

B 25 J 9/00

B 25 J 15/00

B 25 J 11/00

B 25 J 19/00

The present search report has been drawn up for all claims

| Place of search | Date of completion of the search | Examiner |
|---|---|---|
| VIENNA | 04-02-1988 | KRAL |